# EUROPEAN PATENT APPLICATION

(11) **EP 3 952 239 A1**
(43) Date of publication of application: **09.02.2022**
(21) Application number: 20189373.2
(22) Date of filing: 04.08.2020
(51) Int. Cl.: H04L 29/06, H04W 12/12, H04W 12/10

(54) **METHOD AND DEVICE FOR AUTHENTICATING A BASE STATION**

(71) Applicant: Koninklijke Philips N.V., 5656 AG Eindhoven (NL)
(72) Inventor: GARCIA MORCHON, Oscar, 5656 AE Eindhoven (NL)
(74) Representative: Philips Intellectual Property & Standards

(57) **Abstract**

The present invention relates to a method for a secondary station to obtain a time reference in a cellular network in order to verify the freshness of received messages.

The method comprises the steps of receiving a plurality of system information, SI, messages from a plurality of primary stations, said SI messages including each a respective time reference information related to the corresponding primary station,
checking the validity of a received signature for each of the primary stations,
checking a cell identifier for each of the primary stations with a valid signature, and ignoring time reference information from primary stations with a cell identifier being identical to another primary station and having an earlier value than the one from the other primary station, and deducing a local time reference from one or more of the time reference information originating from primary stations with a valid signature.

## Description

### FIELD OF THE INVENTION

The present invention relates to the field of wireless communications, and in particular to security aspects of the communication between a primary station, e.g. a base station, and a secondary station, e.g. a terminal or a mobile station forming a network. Other entities may be present in such a network, such a security entity.

### BACKGROUND OF THE INVENTION

In wireless networks, terminals connect to the network in order to exchange data. Security is crucial in particular for wireless devices where a physical interaction is not required to access the network. Wireless networks must thus implement some measures to be able to exclude devices that are not authorized in the network.

A conventional attack includes an attacker to impersonate an entity of the wireless network, and in particular the primary station, or base station. Thus, many countermeasures are aimed authenticating the identity of the various entities of the network.

3GPP is the organization in charge of the standardization of global solutions for mobile telecommunication systems. The telecommunication systems being developed in the 3GPP partnership are no exception. In particular, in 5G, security measures are under discussions to reinforce the security of the network.

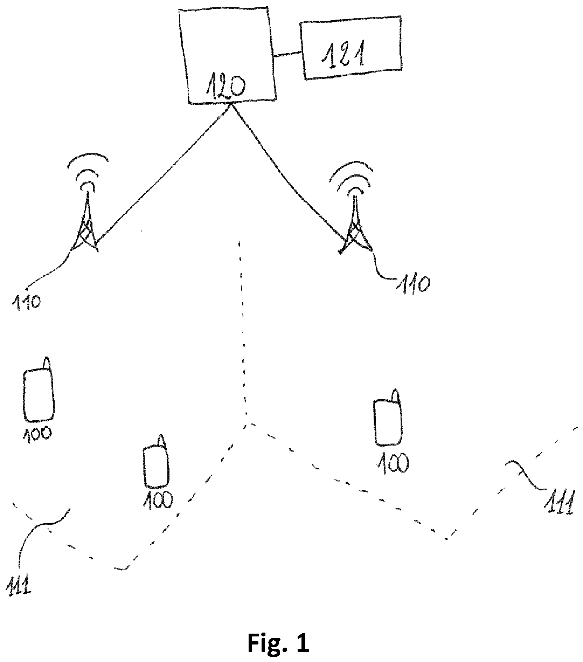

In these telecommunication systems illustrated on Figure 1, secondary stations 100 act as terminals or end devices (also referred to as User Equipment, UE, in 5G). The secondary station can access different types of services including voice and data services through primary stations 110 acting as base stations (also referred to as gNB in 5G) that are deployed in field. Each primary station 110 serves and communicates with the secondary stations 100 present in an area, also referred as a cell 111. The primary stations are connected to a core network (CN) 120 - managed by a network operator - that controls the telecommunications systems and orchestrates the delivery of services.

As mentioned above, an attackers may impersonate network entities such as the primary station by using "False" base stations (FBS) to attack the secondary stations in many ways. A FBS behaves as a proper primary station managed by the network operator and aims at attracting UEs with different goals such as:
- perform DoS attacks,
- obtain private user data,
- perform Man in the Middle (MitM) attacks and subsequent attacks (e.g. aLTEr, imp4gt, network misconfiguration,...),
- Perform authentication relay attacks;
- Perform Self-Organizing Networks poisoning attacks,
- Send fake public warning information.

In Annex E of the 3GPP TS 33.501 it already described how the network can use information sent in measurement reports in RRC_CONNECTED mode to perform "UE-assisted network-based detection of false base station".

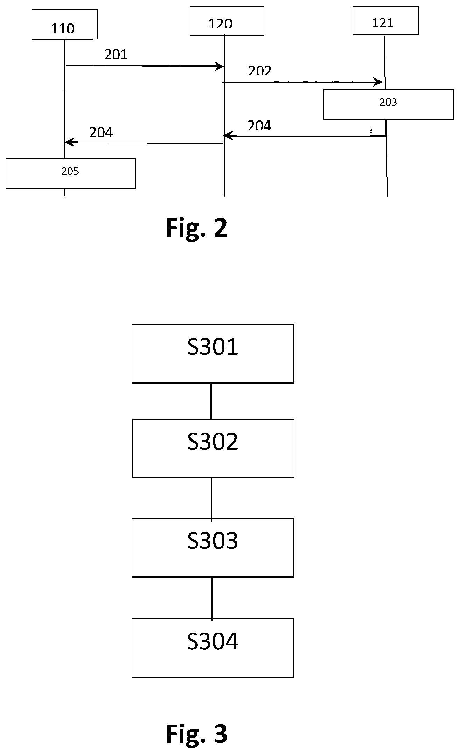

One of the solutions currently discussed by 3GPP consists in the implementation of a Signature Generator 121 as part of a Digital Signing network Function (DSnF) that will be part of the Core Network 120 and that will allow to protect the broadcast messages. It aims in particular at ensuring the source authentication. Thus, as shown in Figure 2, when a primary station 110 has to broadcast system information, it sends a request 201 to the Core Network 120, which transfers a corresponding request 202 to the Signature Generator 121. The Signature Generator 121 then compute a corresponding signature in 203 and provides the primary station 110 through the Core Network 120 with the signed messages 204 to that will be broadcasted at a later point of time 205.

3GPP is currently studying the FBS issue and discussing different solutions. One of the solutions that is receiving more attention and support consists in the implementation of a Digital Signing network Function DSnF) that will be part of the CN and that will allow to protect the broadcast messages (source authentication). When a gNB has to broadcast system information, it sends a request to the DSnF that provides the gNB with the signed messages that will be broadcasted at a later point of time.

In a network like in 5G, the overall proposed process for a UE is thus as follows:
i) scan frequencies,
ii) remove or ignore configuration messages such as system information (SI) messages with duplicated PCI (Physical Cell Identifier), i.e. that exhibit the same cell identifier, meaning that at least one of them is False Base Station,
iii) acquire the configuration messages (e.g. MIB/SIBs),
iv) check the signatures associated with the configuration messages,
v) check whether a time marker shows that the message was indeed sent recently to decide on the freshness of the message. This is useful for the case of messages originated by real primary station but repeated or relayed (usually once tampered with) by False Base stations, and
vi) if a UE does not have a notion of time or if the freshness check fails, use information from multiple cells to check time consistency.

However, this protocol exhibits some weaknesses which can be used by attackers. In particular, it is possible to exploit one of the countermeasures against the system. For example, if an attacker uses a plurality of False Base Stations having the same identifiers (e.g. PCI) as the real Base Stations, both the real and the FBS would be excluded. It would then suffice for the attacker to add another FBS with a different identifier and that would be the only available option for the UE in the cell. Such a UE would then uses the wrong information provided by the FBS, such as an incorrect time that would render useless the freshness checks once in operation.

### SUMMARY OF THE INVENTION

One aim of the present invention is alleviate the above mentioned problems.

Another aim of the present invention is to provide with a method which allows to increase the difficulty for attackers to access or impersonate an entity of the network.

Still another aim of the invention is a secondary station which is able to detect a false base station to ignore its messages.

Thus, in accordance with a first aspect of the invention, it is proposed a method as claimed in claim 1 for a secondary station to obtain a time reference in a cellular network. In accordance with this first aspect, the method comprises the steps of
receiving a plurality of system information, SI, messages from a plurality of primary stations, said SI messages including each a respective time reference information related to the corresponding primary station,
checking the validity of a received signature for each of the primary stations,
checking a cell identifier for each of the primary stations with a valid signature, and ignoring time reference information from primary stations with a cell identifier being identical to another primary station and having an earlier value than the one from the other primary station, and
deducing a local time reference from one or more of the time reference information originating from primary stations with a valid signature.

Thus, by not removing the configuration messages originated from primary station having the same identifier before the signature verification, it allows to first exclude any False Base Station that would use already existing identifiers. It is thus no more possible for the attackers to cause the secondary station to exclude real primary station by this check. As a result, this enables the secondary station to obtain the correct timing information required for the freshness checks once in operation in the network.

In a first variant of the first aspect, the time reference information is at least one of the following: a time offset representative of the difference between a clock value at the primary station and a clock value at a Signature Generator of the network, a clock value at the primary station, a clock value at the Signature Generator.

This allows for the communication of the time to be efficient in terms of overhead as it can be coded as an deviation (or offset) from the time already available of the primary station.

In another variant of the first aspect, the step of deducing a local time reference includes computing an average from a plurality of the time reference information originating from primary stations with a valid signature and without duplicate cell identifier with earlier time.

Thus, this allows to mitigate some errors or deviation of the time. This also renders more difficult an attack as the computed time would only be based partially on the False Base Stations, requiring thus a larger number to be really detrimental.

In still another variant of the first aspect of the invention, the step of deducing a local time reference includes selecting the time reference information with the latest value originating from primary stations with a valid signature.

This variant thus uses the latest time displayed by the various validated primary stations. Thus, this helps to prevent a False Base Station using an old time value in order to replay past messages and pass the freshness criteria once in operation.
Further, in accordance with another aspect of the invention, which can be used independently or in combination from the first aspect and its variants, it is proposed a method for a secondary station comprising
the secondary station at initial connection to the network sending a request for a time reference, said request being addressed to a Signature Generator,
wherein the request for time reference includes a randomly generated number used as a nonce,
receiving the time reference and the nonce, wherein the time reference and the nonce are signed with a nonce signature,
using the nonce and nonce signature to check authenticity of received messages,
using the received time reference to configure a clock at the secondary station.

In a variant of this aspect of the invention, the request is part of an Initial Radio Resource Communication, RRC, setup request message. Alternatively, the request may be part of a Network Access Stratum, NAS, identity response message sent in response to a NAS identity request.

This aspect of the invention, which can be used in combination with the first aspect of this invention in order to render the system even more reliant against attacks, presents the advantage of an early integration. Thus, this solution does not leak any secondary station information, despite adding some steps to the Radio Resource Control, RRC, setup procedure and state machine at the primary station.

In a variant that can be used in combination with all the previous aspects of the invention and their variants, the received signature is checked using at least one of the following algorithm: a Public Key Infrastructure, PKI, algorithm, a Boneh-Lynn-Shacham, BLS, signing algorithm, a Boneh-Gentry-Lynn-Shacham, BGLS, signing algorithm, an Elliptic Curve Digital Signature Algorithm, ECDSA, Falcon signing algorithm, Rainbow signing algorithm, a Great Multivariate Short Signature, GeMSS, algorithm.

In accordance with a second aspect of the invention, it is proposed a secondary station as claimed in claim 9. This secondary station is adapted for communicating in a network and comprises a receiver adapted to receive a plurality of system information, SI, messages from a plurality of primary stations, said SI messages including each a respective time reference information related to the corresponding primary station,
a controller configured to check the validity of a received signature for each of the primary stations, and to check a cell identifier at least for each of the primary stations with a valid signature, and ignore time reference information from primary stations with a cell identifier being identical to another primary station and having an earlier value than the one from the other primary station, and
said controller being adapted to deduce a local time reference from one or more of the time reference information originating from primary stations with a valid signature.

Thus, by not removing the configuration messages originated from primary station having the same identifier before the signature verification, it allows to first exclude any False Base Station that would use already existing identifiers. It is thus no more possible for the attackers to cause the secondary station to exclude real primary station by this check. As a result, this enables the secondary station to obtain the correct timing information required for the freshness checks once in operation in the network.

It is noted that the above apparatuses may be implemented based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

It shall be understood that the method of claim 1, and the secondary station of claim 9 may have similar and/or identical preferred embodiments, in particular, as defined in the dependent claims.

It shall be understood that a preferred embodiment of the invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

Figure 1 already described, is a block diagram representing a cellular network in which the invention can be implemented;
Figure 2, already described, is a logical time diagram representing the messages exchanges in accordance with a protocol proposal;
Figure 3 is a flowchart representing a method in accordance with a first embodiment of the invention;
Figure 4 is a flowchart representing a method in accordance with a second embodiment of the invention;
Figure 5 is a block diagram representing a secondary station in accordance with the first embodiment of the invention;
Figure 6 is a flowchart representing a method in accordance with a third embodiment of the invention;
Figure 7 is a flowchart representing a method in accordance with another aspect of the third embodiment of the invention;
Figure 8 is a block diagram representing a secondary station and a Signature Generator in accordance with the third embodiment of the invention;
Figure 9 is a flowchart representing a method in accordance with another aspect of a fourth embodiment of the invention;
Figure 10 is a time diagram showing a protocol of transmission of successive messages and corresponding signatures in accordance with the fourth embodiment of the invention;
Figure 11 is a time diagram showing an alternative protocol of the successive messages and corresponding signatures in accordance with a variant of the fourth embodiment of the invention;
Figure 12 is a block diagram representing a network in accordance with a first example of the fifth embodiment;
Figure 13 is a block diagram representing a network in accordance with a second example of the fifth embodiment; and
Figure 14 is a block diagram representing a network in accordance with a sixth embodiment of the invention.

### DETAILED DESCRIPTION

As seen above, the present invention can be implemented in a cellular network as for example a 5G network. As seen in relation with Figure 1, such a cellular network comprises a plurality of terminals or secondary stations 100, being mobile devices (or UEs) that may travel from a network cell to another 111. Each cell 111 is served by a primary station 110 (or a gNodeB) which makes the interface between the secondary stations 100 and the Core Network 120.

Therefore, the secondary stations 100 communicate with the primary stations 110 on various radio channels, uplink (from the secondary stations to the primary station) and downlink (from the primary station to the secondary stations). Other radio channels exist, for example between secondary stations (for example Sidelink channels) and between primary stations (e.g. X2 interface), but are not represented for the sake of simplicity of Figure 1. The embodiments of the invention could also be applied to these interfaces however it will be focused in the following parts of the description to the links between the secondary stations and the primary stations.

In order to allow secondary stations to connect to the network, the primary stations 110 may broadcast some configuration information over the cells 111. This configuration information includes Master Information Blocks (MIBs) and System Information Blocks. First, the MIB is a message broadcasted periodically (e.g. every 80ms) and which includes all the required information to allow the decoding of the following SIBs.

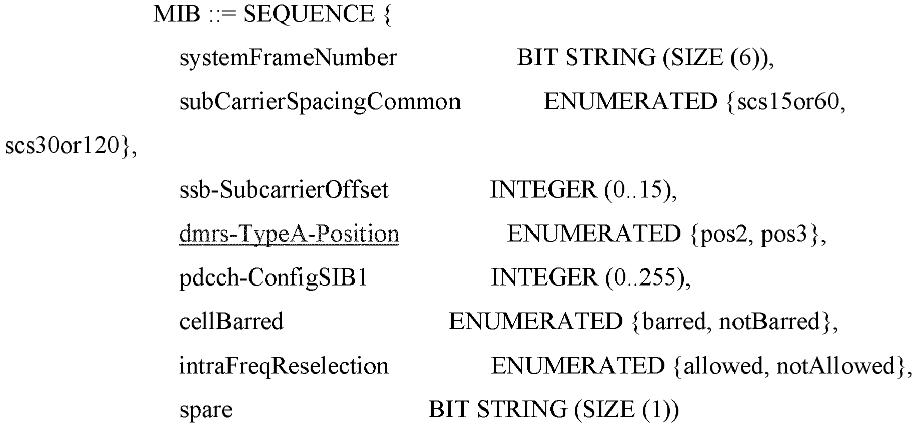

Once the secondary station obtained the MIB, it can decode several System Information Blocks that can be transmitted periodically as well (e.g. every 80ms, 160ms) or on request from the secondary stations. These SIBs describe the operation and parameters of the network. In order to improve the security of the whole network, it is proposed to add digital signatures to these SIBs, preventing anyone to impersonate a primary stations. A digital signature is a technique that binds an entity to the digital data. This binding can be independently verified by receiver as well as any third party. Thus, a digital signature is a cryptographic value that is calculated from the data and a secret key known only by the signer. The data corresponds in the present case to the payload carried in the SIBs themselves. The signature allows the secondary station to have assurance that the message belongs to the primary station.

In the example of 5G, one of the options available is that a Digital Signature Generator of the Core Network 120 generates and provides signatures to the primary stations 110 upon request from these primary stations for each message. Another option is that a Digital Signature Generator in included in each of the primary stations. This solution could be used for at least some of the messages, which would reduce the load on the Digital Signature Generators of the Core Network.

One of the aspects of these signatures is to ensure that the signature was not added by a third party, e.g. an attacker that is replaying messages to impersonate a real primary station. To avoid this, a freshness value can be added to the signature to ensure that the signature was generated recently. Therefore, one option to verify the freshness of the information is by synchronizing clocks and checking that the information is not too old. Time is based on the time owned by the Signature Generator (DSnF) and the secondary stations (UEs) must know this time. This time might differ from the other time available to the secondary station or the time available at the primary station. However, this requires the secondary stations and entity generating the signature to be synchronized in some way.

From the whole network point of view, the operation of the Signature Generator (DSnF), the primary station (gNB) and the secondary station to deal with time differences can be as follows:
- when the primary station sends a signing request to the Signature Generator for at least some of its parameters, for example its static parameters i.e. that remain unchanged during a long interval period of time, the primary station may include its own time. When doing so, the primary station and the Signature Generator may run a time protocol (such as Simple Network Time Protocol, SNTP) to correct timing errors due to the latency of message transmission or different local times. The Singature Generator may sign a field relative to the time difference between the primary station clock value and the Signature Generator clock value, e.g. a gNB_DSnF_time_difference field. Since this value should not deviate much over time, this is a static field as long as the difference between the clocks does not deviate more than a threshold.

Typically, time should remain in sync during a long interval period of time. If this assumption does not hold, the primary station then asks again the Signature Generator to sign the time difference. The Signature Generator may then include in each signed message the latest static time difference with the primary station as well as its current time.

In operation, the primary station may broadcast on a regular basis the signed messages including the time difference between primary station and the Signature Generator. The time of the primary station is broadcasted in System Information Block 9, SIB9 or could be broadcasted in other System Information messages. To reduce the communication overhead, this time may also be included in SIB1. The time in SIB9 can includes UTC time and also GPS time and it can be computed as GPS Time (in seconds) = timeInfoUTC (in seconds) - 2,524,953,600 (seconds) + leapSeconds as defined in SIB9. Alternatively, it is also possible to include the signed time owned by the Signature Generator (DSnF).

Upon reception of timing information in SIB1 and SIB9, the secondary station obtains the Signature Generator time and checks whether the received message is too old, e.g., not older than a signature validity duration, e.g., shorter than the System Frame Numbering/HyperFrame Numbering (SFN/HFN) duration (2h54'45"). In other words, the signed message is only valid for around 3 hours.

In absence of other time source, this time may be used to synchronize the secondary station clock once it joins a primary station and establishes a secure connection with the core network. The time distributed by the primary station provides a synchronization error of around 10 ms which is enough for the purposes of secure broadcast of System Information. Indeed, MIB and SIB1 are distributed with a periodicity of at least 80ms. Once a device has joined a trusted primary station and has access to trusted Signature Generator time:
a) The device should further improve its time synchronization by using standard techniques.
b) Afterwards, the device should not update its time unless it detects that it has lost synchronization due to other reasons.

Furthermore, since above time accuracy might not be enough or the attacker could replay old signed messages from a valid primary station, the secondary station needs some external source of data to further validate its time. The following options are feasible:
- if the Signature Generator has a time related to GPS, and this relation is known, the secondary station can get the time. However, not all devices have a GPS unit, or the reception of the GPS signal may not be possible in some locations.
- In absence of any time reference and before joining any primary station, the secondary station can learn the broadcasted SI from multiple primary stations, and check their similarity, and take the newest time. This has the problem that an attacker might place multiple fake base stations so that a secondary station gets the wrong time. Another problem arises if the secondary station rejects primary stations with duplicate cell identifiers (PCIs) prior to any signature verification. Besides the fact that this can increase the duration of the cell selection process since the process cannot end till all frequencies are scanned, this involves an additional issue. If this is done, an attacker can just advertise duplicate False Base Stations of the real base stations, i.e., with the same PCI - no signature is required, so that the secondary station will not take into account the good time measurements from those primary stations into account. In this case, the secondary station should check the signature first and reject the system information that is not properly signed. If after this step there is system information broadcasted from two different primary stations with the same PCI, then the secondary station should take the values with the most recent system information. If there are multiple primary stations broadcasting system information that is correctly signed and whose times are close, e.g., within 80ms, an approach is to take the highest time as the correct one. However, this might also be because that the primary station is slightly out of sync. Another approach is that the secondary station computes its time as the average of the received times.

Thus, in accordance with a first embodiment of the invention, it is proposed for the secondary station to obtain a time reference for maintain synchronization based on signals obtained only from validly signed primary stations, as shown on Figure 3. To do so, a secondary station 100 first receives a plurality of system information, SI, messages from a plurality of primary stations 110, for example serving all the neighboring cells at step S301. These SI messages include each a respective time reference information related to the corresponding primary station. This time reference would typically be the clock value at the Signature Generator at time of signature of the messages or the clock value of the primary station at the time of transmission of the SI messages. The time reference may also be based on the System Frame Number and/or the subframe number in which the SI messages were sent combined with a timing mapping reference which enables the secondary station to compute the absolute time.

At step S302, the secondary station checks the validity of a received signature for each of the primary stations. Any primary station for which the signature is not found valid is then ignored for the computation of the timing information. At step S303, the secondary station then checks a cell identifier for each of the primary stations with a valid signature, and ignores time reference information from primary stations with a cell identifier being identical to another primary station. For example, the primary station having an earlier value than the primary station sharing the same cell identifier is excluded. This means that at step S303, the secondary station compares the cell identifiers of all the primary stations. If there are any duplicated cell identifiers, the secondary station assumes that primary station showing an earlier time value and a duplicated cell identifier are False Base Stations replaying past messages.

At step S304, the secondary station deduces a local time reference from one or more of the time reference information originating from primary stations with a valid signature. Thus, the secondary station after excluding False Base Stations at steps S302 and S303, can trust the remaining primary stations, and obtain a time reference with which the secondary station synchronizes its clock based on the deduced time for the purpose at least of checking freshness of the received messages.

As mentioned earlier, the time reference information may be a clock value at the primary station, or a clock value at the Signature Generator. Alternatively, the time reference may be a time offset representative of the difference between a clock value at the primary station and a clock value at a Signature Generator of the network. Thus, the secondary station can thereafter deduce the clock value of the Signature Generator from the clock value of the primary station or from the System Frame number of the message.

The computation of the local time reference at step S304 may be performed by computing averaging some or all of the time reference information originating from primary stations with a valid signature and without duplicate cell identifier with earlier time. It may be advantageous to prefer first some of the detected primary stations for example on some priority or trust credit (e.g. based on hardware or firmware version). Alternatively, the step S304 includes selecting the time reference information with the latest value originating from primary stations with a valid signature and without duplicates with an earlier time.

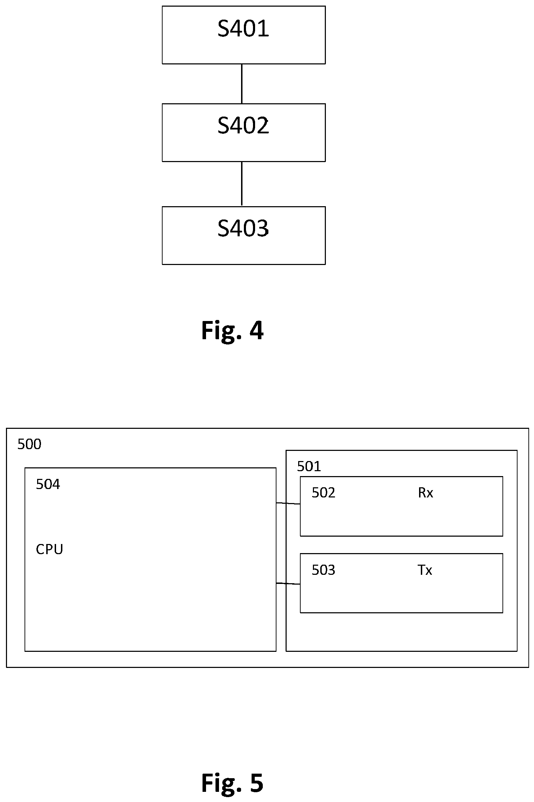

Figure 5 is a block diagram representing a secondary station 500 in accordance with the first embodiment of the invention. This secondary station comprises a communication unit 501 including a receiver 502 and a transmitter 503 adapted for communicating in a network, for example in a 5G cellular network.

The receiver 502 comprises at least one antenna or an antenna array with a plurality of antennas. This receiver may be adapted to receive messages sent from a plurality of primary stations. Such messages can be system information, SI, messages for configuration of the secondary station communication unit 501 in the communication network. These SI messages includes each a respective time reference information related to their respective primary station. The secondary station 500 also include a controller 504 to control the operation of the secondary station. This controller may be a Computer Programming Unit or other combination of hardware and software. The controller 504 is configured to check the validity of a received signature for each of the primary stations, and to check a cell identifier at least for each of the primary stations with a valid signature, Then, the controller 504 ignores time reference information from primary stations with a cell identifier being identical to another primary station and having an earlier value than the one from the other primary station. Eventually, the controller 504 deduces a local time reference from one or more of the time reference information originating from primary stations with a valid signature.

In a second embodiment, which can be implemented independently from the first embodiment, but which can also be combined with the first embodiment, it is proposed for the secondary station to get direct access to the Signature Generator time. The first time the secondary station connects to the network, e.g. a 5G system, and/or in absence of trusted time and/or after being offline for a long period of time, the secondary station can join a primary station even if time verification check is wrong. In this case, the first action to carry out by the secondary station is to get direct access to the Signature Generator time. No other actions must be carried out before this happens. To this end, the secondary station can start a secure time-request connection with the core network. In the first message of the time-request connection the secondary station will include a nonce (e.g., a 128-bit or longer randomly generated value) to ensure the freshness of the handshake. The secondary station will start a local timer as well. This message does not need to be secure from the point of view of the secondary station. This message will be forwarded to the Signature Generator (DSnF) that will sign its current time and the received nonce. The message is then sent to the secondary station through the primary station. Upon reception of the message, the secondary station checks the validity of the signature and the presence of the nonce so that the secondary station knows that this message is not replayed and it is fresh. It is possible for the secondary station to check whether to accept the message, if the timer does not exceed a given value, e.g., 20 ms. The secondary station may then correct the received Signature Generator time by adding timer/2. Given this time, the secondary station can proceed to check the validity of the signed system information and the time. If the received system information is recent, it can join the primary station. If it is not recent, the secondary station will disconnect from the primary station. An alternative to the above handshake is to perform any other secure time synchronization protocol with the Signature Generator to gain its time. We note that a risk of this protocol is to be misused by an attacker to send many time requests towards the Signature Generator to flood it but those time requests can be blocked at different parts of the system, e.g., primary station, if a given threshold (amount of requests per second) exceeds a threshold.

This protocol could be integrated in the initial RRC setup procedure. An approach is to include the nonce in the RRCSetupRequest. The signed answer from the Signature Generator is included by the primary station in the RRCSetup message. The advantage of such an early integration is that this does not leak any information relative to the secondary station. However, it makes the RRC setup procedure and state machine at the primary station more complex. Alternatively, the nonce can be included in the NAS identity response message sent by the secondary station as answer to the NAS identity request. When the Core Access and Mobility Management Function (AMF) receives this message with a nonce, the AMF forwards this to the Signature Generator for time signing. The answer should be provided before or at the same time that the AMF sends the NAS Authentication Request to the secondary station. In this way the secondary station can verify the time and the primary station certificates before engaging in any further communication.

Thus, as seen previously, in the second embodiment now described in reference to Figure 4, and which can be combined with the first embodiment or implemented independently, the secondary station may also at initial connection to the network send a request for a time reference at step S401, said request being addressed to a Signature Generator. This request may optionally be forwarded by the primary station to the Signature Generator, if this Signature Generator is in a separate entity than the primary station. The request for time reference includes a randomly generated number used as a nonce prepared by the secondary station.

At step S402, the secondary station receives a response message including the time reference and the nonce. The time reference and the nonce are signed with a nonce signature prepared by the Signature Generator. The secondary station then checks at step S403 the authenticity of the received message by using the nonce and nonce. Eventually, the secondary station uses the received time reference to configure a clock at the secondary station.

In this embodiment, the request may be part of an Initial Radio Resource Communication, RRC, setup request message or of a Network Access Stratum, NAS, identity response message sent in response to a NAS identity request.

In any of the previous embodiments, it is to be noted that the received signature is prepared by the Signature Generator using at least one of the following algorithm: a Public Key Infrastructure, PKI, algorithm, a Boneh-Lynn-Shacham, BLS, signing algorithm, a Boneh-Gentry-Lynn-Shacham, BGLS, signing algorithm, an Elliptic Curve Digital Signature Algorithm, ECDSA, Falcon signing algorithm, Rainbow signing algorithm, a Great Multivariate Short Signature, GeMSS, algorithm. Similarly, the secondary station uses a corresponding algorithm to verify the validity of the signature.

Additionally, in complement to the above solutions, if the Signature Generator relies on a time from a trusted external source (e.g., the current NIST beacon or the time from a known reference source), the secondary station can get the current time directly if it has a different type of connectivity, e.g., WiFi. The Signature Generator itself could also have a known API that can be known/preconfigured to the secondary station so that a secondary station can access the time source at any time as soon as it has access to the Internet.

In accordance with a third embodiment which can be used in combination of any of the first and/or second embodiments or independently, it is proposed to use different signatures depending on the type of parameters included in the System Information Blocks. Indeed, it has been recognized that some parameters included in the configuration messages are static and are unlikely to need frequent updates. Thus, it is possible to sign the static parameters once and reuse the obtained signature in following messages.

Indeed, the current solution does not exploit the fact that some fields of the System Information Blocks SIBs remain static and others keep changing. The currently used option is to always sign everything. However, this can be inefficient. Thus, according to a first example of the third embodiment, it is proposed to compute the signature as:
*DSA (HASH(HASH(fixed_field)*|*changing_field))*

Where DSA is a Digital Signature Algorithm, e.g.ECDSA, and HASH is a hash function, e.g. a hash, a hash chain, or a Merkle Tree. The fixed_field is a field that can include one or more parameter values whose values are static by nature. By static, it is meant for example that a change of this static parameter configuration is unlikely to occur, for example as these are linked to the ground configuration of the cell. Conversely, the changing field includes typically more dynamic parameters values that are likely to be adjusted regularly, for example based on the current load of the cell or an interference status.

This approach also reduces communication overhead since the fixed fields do not need to be submitted to Signature Generator in every single message. Instead, it can be communicated which fields remain constant and for how long, and the value of the changing fields. Similarly, when communicating with the Signature Generator, the primary station could only send HASH(fixed field). Obviously, this has the risk that the Signature Generator does not have a chance of verifying the system information. This verification can be done once the Signature Generator; and at later iterations, the Signature Generator can only check that the hash of the fixed field does not change.

Similarly, the signature can be computed per MIB and SIB. However, it can also be computed over multiple blocks of SI including MIB, SIB1, SIB2 for example. The secondary station can for instance obtain a single signature for both MIB and SIB1 that form MSI. The signature itself can be in SIB 1 and both MIB and SIB 1 would need to be obtained to verify the signature. This could be advantageous in fact since MIB is very small and a long signature is unlikely to fit in it. However, it is important to verify the information transmitted in the MIB. Similarly, other information such as the PCI can be verified. In an example of this embodiment, the detected PCI, MIB, and SIB 1 can be concatenated to sign them together. The resulting signature could be included in SIB1.

Similarly, the signature could be located in a new SIB that can be obtained on request by the secondary station. This can help to address backwards compatibility and reduces the communication overhead since it is only exchanged on demand. In this case, a secondary station can send a request including a nonce that will be forwarded by the primary station to the Signature Generator for signature. This approach ensures the freshness of the signed information.

Similarly, the signature can be computed on the root of a Merkle tree whose leaves are the different SIBs. In this way, it possible to verify the different SIBs individually while minimizing overhead. SIB 1 includes the root of the Merkel tree that is signed. When device requests a different SIB, it is verified with that Merkle tree root.

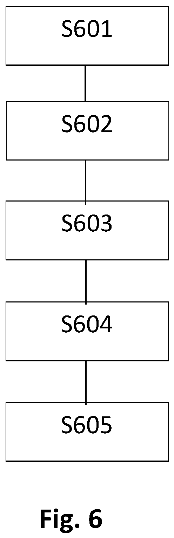

Thus, according to the third embodiment illustrated on Figure 6, it is proposed a method for checking authenticity of a set of information, the method comprising
receiving at step S601 at least one configuration message from a primary station at a secondary station, wherein said configuration message includes a plurality of fields relative to respective parameters,
receiving at step S602 a received signature for authenticating the configuration message from the primary station at the secondary station. The steps S601 and S602 may be performed in a single step, for example if the signature is attached the message received at step S601. However, it is also possible to have a single signature used to sign a plurality of messages. In such a case, the signature may be sent after or with the last of these messages. Indeed, the step of receiving at least one configuration message may comprise receiving a plurality of configuration messages, and the received signature may authenticate the plurality of configuration messages.

The method of the third embodiment further includes obtaining at step S603 a first hash value based on a first subset of the fields, the first subset of the fields consisting of one or more first field being relative to a parameter having a static value,
applying at step S604 a second hash operation on a combination of the first hash value and a second subset of the fields to obtain a second hash value, the second subset of fields consisting of one or more second field being relative to a parameter having a variable value,
verifying at step S605 the received signature on the basis of the second hash value to authenticate the received configuration message.

In an example of the third embodiment, the step S605 may be performed by comparing the received signature with a signature derived from the second hash value to authenticate the received configuration message.

Thus, this embodiment allows to reduce the amount of messages a Signature Generator has to sign. Further, a stronger signature algorithm can be used to sign the static parameters of the configuration messages, thus reducing the load of computation on the secondary station as well while maintaining at least the same level of protection.

It can be noted that at step S603 of obtaining the first hash value, this can also include retrieving a previously computed first hash value, stored in a memory of the secondary station. Indeed, the first hash value may have been computed for an initial message, and reused for each of the following configuration message. This avoids recomputing this first hash value multiple times.

Indeed, for the initial message carrying (new) static parameters, the step S603 of obtaining the first hash value includes applying a first hash operation onto the first subset of fields to obtain the first hash value, and storing the first hash value for subsequent use.

In a variant of this third embodiment, it is possible to determine at step S603 whether a valid stored first hash value is present in a memory of the secondary station, and to retrieve such first hash value from the memory upon determination that a valid first hash value is present. Else, the secondary station may apply a first hash operation onto the first subset of fields to obtain the first hash value, and store the first hash value for subsequent use in the memory upon determination that a valid first hash value is not present. In such a variant, the first hash value is considered valid if one or more of the following conditions is satisfied: the time elapsed since its generation is below a validity threshold, the identity of the primary station is authenticated, the primary station is the currently serving primary station. Such a validity threshold value can be signaled from the primary station or be equal to the periodicity of some System Information messages.

At step S604, the method of the third embodiment may include deriving the derived signature by applying a digital signature algorithm onto the second hash value.

Like in the previous embodiment, wherein the digital signature algorithm is an ECDSA (Elliptic Curve Digital Signature Algorithm).

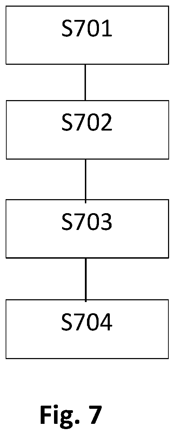

In a further aspect of the third embodiment shown on Figure 7, it is proposed a method for generating a signature for authenticating a set of information, the method comprising

At step S701, receiving at a signature generator from a primary station at least one configuration message for configuring a secondary station, wherein said configuration message includes a plurality of fields relative to respective parameters. The signature generator then obtains at step S702 a first hash value based on a first subset of the fields, the first subset of the fields consisting of one or more first field being relative to a parameter having a static value. The signature generator can then apply at S703 a second hash operation on a combination of the first hash value and a second subset of the fields to obtain a second hash value, the second subset of fields consisting of one or more second field being relative to a parameter having a variable value, generating a signature derived from the second hash value to authenticate the configuration message. In an alternative, this step may be performed at the primary station after reception of the first has value.

At step S704, the signature generator transmits to the primary station the signature.

In such a case, the step of obtaining the first hash value may comprise one of the following steps:
receiving the first hash value from the primary station,
retrieving a previously computed first hash value, stored in a memory of the secondary station, or
applying a first hash operation onto the first subset of fields to obtain the first hash value.

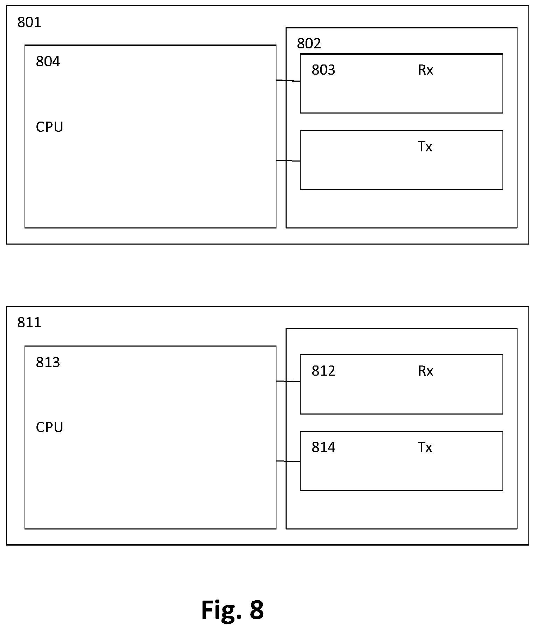

The structure of such a secondary station and Digital Signature entity is shown in Figure 8. On Figure 8, a secondary station 801 comprises a communication unit 802 including a receiver 803. This receiver 803 is adapted to receive at least one configuration message from a primary station, wherein said configuration message includes a plurality of fields relative to respective parameters. The receiver is also configured to receive a received signature for authenticating the configuration message from the primary station..

The secondary station also includes a controller 804 which is configured to obtain a first hash value based on a first subset of the fields, the first subset of the fields consisting of one or more first field being relative to a parameter having a static value. This controller may be a Computer Programming Unit or other combination of hardware and software. The controller can perform a second hash operation on a combination of the first hash value and a second subset of the fields to obtain a second hash value, the second subset of fields consisting of one or more second field being relative to a parameter having a variable value and then to verify the received signature on the basis of the second hash value to authenticate the received configuration message.

The Signature Generator 811 of Figure 8 is adapted to generate a signature for authenticating a set of information. In particular, the signature generator 811 comprises a receiver 812 adapted to receive from a primary station at least one configuration message for configuring a secondary station, wherein said configuration message includes a plurality of fields relative to respective parameters. This receiver 812 typically comprises an antenna or an antenna array it is connected wirelessly to the primary station. However, as the Signature Generator can be part of the Core Network, this communication unit may be wired, so for example based on an Ethernet connection or an optical fiber connection linking it to a primary station. Additionally, it is possible in a variant of this embodiment that the Signature Generator is present in the primary station itself. In such a case, the receiver is a logical receiver that receives packets from higher layers and are processed by the Signature Generator 811.

The signature generator comprises a controller 813 to obtain a first hash value based on a first subset of the fields, the first subset of the fields consisting of one or more first field being relative to a parameter having a static value. The signature generator controller 813 can apply a second hash operation on a combination of the first hash value and a second subset of the fields to obtain a second hash value, the second subset of fields consisting of one or more second field being relative to a parameter having a variable value. The controller is configured to generate a signature derived from the second hash value to authenticate the configuration message.

Eventually, the signature generator comprises a transmitter 814 to transmit to the primary station the signature. As seen before, it is possible in a variant of this embodiment that the Signature Generator is present in the primary station itself. In such a case, the transmitter is a logical transmitter that transmits packets to lower layers of the primary station.

In accordance with a fourth embodiment of the invention that can be implemented independently or in combination of the previously discussed embodiments, it is proposed a method for checking authenticity of a set of information in which different signature verifications algorithms are selected depending on the time.

Indeed, when considering efficient signature algorithms that are for example quantum-resistant, it is important to realize that the currently known quantum-resistant (QR) signature algorithms are bulky, in either their public-keys, or their signatures, or both. As a comparison, it must be considered that Master Information Block (MIB) has a total size of 23 bits as seen earlier and SIB1 (SI message) is limited at Physical layer to a maximum of 2976 bits. This maximum physical size limits the applicability of most of the available QR algorithms. In fact, GeMSS and Rainbow are the only feasible quantum-resistant optionshaving signature sizes between 34 and 64 bytes long -- assuming that their very bulky public-keys can be pre-configured on the end devices. It might also happen that with further scrutiny these solutions become less efficient or are even broken.

This fourth embodiment details a solution that is more efficient and can be quantum resistant. A proposed signing solution may be based on a combination of a strong (QR) Digtial Signature Algorithm (DSA) and a lightweight DSA. The strong (QR)DSA can be ECDSA using long keys, e.g., equivalent to AES128 or higher. The lightweight DSA can be ECDSA using small keys, just strong enough to sign the information during a short period of time. Alternatively, the lightweight DSA can be based on a lightweight signature algorithm based on hash chains. This example is the method used in the remaining of the description, but it can be replaced by ECDSA with short keys or other combinations of DSAs.

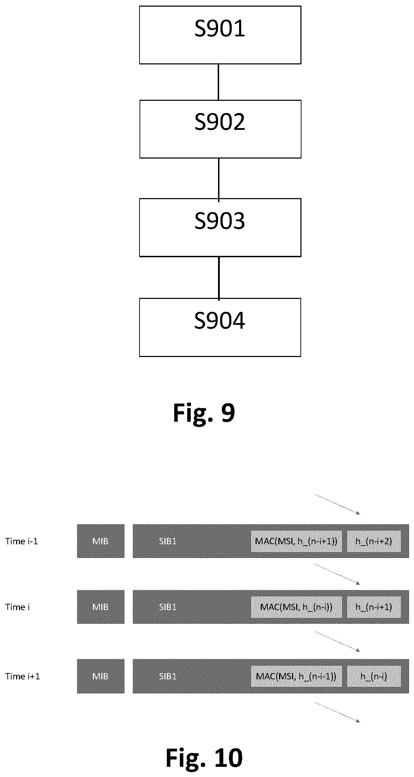

In accordance with the fourth embodiment, it is proposed a method for checking the authenticity of message as described on Figure 9. Such a method comprises a step S901 of receiving a sequence of configuration messages from a primary station at a secondary station. At step S902, the secondary station may receive for each configuration message at least one corresponding signature. Alternatively, a single signature may be used for a set of configuration messages (e.g. MIB+SIB1). At step S903, the secondary station selects at least one digital signature algorithm out of a set of digital signature algorithms, depending on a time reference. This means that, depending on the time instant one or the other DSA algorithm is selected and used to verify the received messages.

Then, at step S904, the secondary station verifies the received signature based on the selected digital signature algorithm. Optionally, a public key may also be used to verify the received signatures.

In a first variant of the fourth embodiment, a first digital signature algorithm is selected more frequently than a second digital signature algorithm. For example, a shorter signature may be used more frequently as it leads to less overhead. Then, with a longer periodicity, a longer signature may be used. As another example, the first signature algorithm is less complicated than the second digital algorithm. This means that the first algorithm requires less computation power to generate and/or to verify the signature than the second algorithm. In an example, the periodicity with which the second algorithm is used equals k times a configuration period. This configuration period is, e.g., a periodicity of variable parameters. The second period may for example be the SFN duration. The second algorithm may be an ECDSA. The first Signature algorithms may be based on hash, for example a hash chain, used in the shorter intervals, only when the second Signature algorithm is not used. Alternatively, the first signature algorithm is always included, which means that in case when the second algorithm is used, the configuration messages includes two signatures.

Further, it should be noted that a preferred variant of the fourth embodiment is that in which the messages in the second period can include the signature of the fields that remain static during the second period, one of those fields is the public-key used to verify the configuration messages that are sent with a configuration period, in a similar manner as in the third embodiment.

Thus, as seen previously, the configuration message can be sent periodically with a configuration period, and a second digital signature algorithm is selected periodically once every second period, wherein the second period is a multiple of the configuration period, said multiple being at least 2. A first digital signature algorithm is selected otherwise or for every message.

The first algorithm may be based on at least one of a hash chain algorithm, a Boneh-Lynn-Shacham, BLS, signing algorithm, a Boneh-Gentry-Lynn-Shacham, BGLS, signing algorithm and wherein the second algorithm may be at least one of an Elliptic Curve Digital Signature Algorithm, ECDSA, Falcon signing algorithm, Rainbow signing algorithm, a Great Multivariate Short Signature, GeMSS, algorithm. In a specific exemplary implementation, the first algorithm is an Elliptic Curve Digital Signature Algorithm, ECDSA, and the second algorithm is also an ECDSA, however, the first algorithm uses shorter keys than the second algorithm.

As discussed earlier, the third embodiment may be combined with this embodiment, in the following manner. The configuration message may thus include a plurality of fields relative to respective parameters. In this example, a first digital algorithm of the digital signature algorithms includes the steps of obtaining a first hash value based on a first subset of the fields, the first subset of the fields consisting of one or more first field being relative to a parameter having a static value.

Then, a second hash operation is applied on a combination of the first hash value and a second subset of the fields to obtain a second hash value, the second subset of fields consisting of one or more second field being relative to a parameter having a variable value. Further, a second digital algorithm of the digital signature algorithms may include the steps of applying a first hash operation to obtain value based on a first subset of the fields, the first subset of the fields consisting of one or more first field being relative to a parameter having a static value.

Regarding the various Digital Signature Algorithm, a natural choice is to select ECDSA as specified in FIPS 186-4 specifications as a signature algorithm. Some other solutions allowing for shorter signatures, batch verification, and precomputation of the signing process are based on bilinear maps. However, it is highly possible that ECDSA and solutions relying on bilinear maps will be used for a limited amount of time due to the advent of quantum computers. Furthermore, even if ECDSA is used and despite its relatively good performance, public-key crypto is still more expensive that simple symmetric-key operations. In some literature, it is reported that the computation of a hash chain with 10000 links takes 14 msec and the verification of an ECDSA 224 signature takes 6.81 msec.

Thus, the proposed signing solution in the fourth embodiment may be based on TESLA (which is hash chain based) and a (QR) DSA. TESLA describes a secure broadcast approach enabling source authentication which is given by a hash chain HC:
h_{n} <- h_{n-1} <- h_{n-2} <- ... <- h_{0}, at time i, where h_{n-i} can be used to compute a message authentication code (MAC) of message m as MAC(m, h_{n-i}).

Here h_{i+1} = hash(h_{i}). The value h_{n-i} is disclosed at time i+1 allowing the receiving parties to verify the previously received MAC by checking
(1) the previously received MAC and
(2) whether the received h_{n-i} equals hash(h_{n-i-1}).

h_{0} is the seed of the HC from which all values are derived. h_{n} is the trust anchor that needs to be distributed in a secure and trusted way to all devices.

This fourth embodiment integrates the hash chain approach in the 5G DSnF system as follows:
The Signature Generator may have both seeds of hash chains and a pair of public/private keys of a suitable DSA, e.g., ECDSA or a QR DSA. The primary station station gNB and the Signature Generator DSnF run a protocol to synchronize their clocks so that the DSnF is aware of the current time of the primary station and can correct any communication delays. A primary station gNB can ask the Signature Generator for the MAC of a message for time i on demand. The Signature Generator may use the hash chain links to efficiently compute the corresponding MACs that delivers to the base station. It is to be noted that these communication flows can be done in advance. The Signature Generator makes use of the time synchronization protocol to be aware of any potential time difference between clocks that is included in the signed messages.

The primary station can broadcast to the secondary stations the signed system information, which has been provided by the Signature Generator, at the right instants of time afterwards.

The Signature Generator may distribute to all subscribed primary stations the used hash chain elements h_{n-i} at time i, that are then further broadcasted by the primary stations to the secondary stations. The first flow of data can be done on demand, i.e., when source authenticated information needs to be signed so that it can be broadcasted at a later point of time. The second communication flow in which the hash chain elements are disclosed requires tight synchronization.

In the context of 5G, it is known that MIB and SIB1 are broadcasted in intervals of 80/160 ms. Thus, the Signature Generator has to distribute with the same frequency the next hash chain element, and this element is broadcasted to all UEs as part of the SI. For instance, it can be considered that the minimum system information (MSI = MIB + SIB1) is protected in this way as depicted in Figure 10. Note that Time i can represent in this case, e.g., a 160 ms slot. At time i+1, the Hash Chain link used to compute the previous MACs is disclosed. This means, e.g., that all messages within a 160 ms interval use the same Hash Chain link. Such a Hash Chain approach is shown for example on Figure 10, representing the sequence of configuration messages and their corresponding signatures.

In the case where the secondary station keeps track of the System Information blocks and it has been initialized with the Hash Chain anchor, then the verification is very fast since a single hash computation is required to verify the previously received hash value. When the secondary station is new to the system, it needs to first receive and verify the HC anchor. Distributing it after the initial NAS handshake is not an option since it can mean that the UE joins a FBS. Thus, going around an actual digital signature algorithm (DSA) does not seem feasible. A very suitable option consists in having a combination of a traditional signing algorithm and hash chain.

Once every long interval seconds (for instance, it could be every 10.24 seconds that is the duration of the system frame number), the Signature Generator signs the next hash chain anchor with a digital signature algorithm (DSA) and distributes it to the primary stations that broadcast it to all secondary stations.

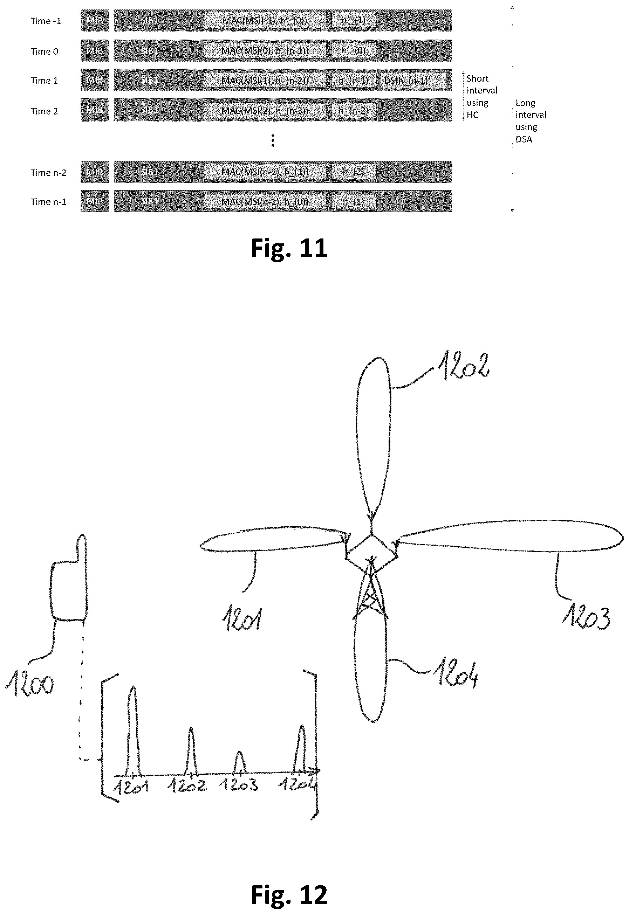

The periodic MIB/SIB1 may be signed at short_interval period of time by means of a MAC following the hash chain approach. This is shown in Figure 11 where the DSA signed anchor is distributed at time 1. This approach combines Hash Chain and Digital Signature Algorithm. With this approach, when the secondary station is joining primary station serving a cell, it requires acquiring the Hash Chain anchor and verifying the Signature. Thus may leads to a small delay, but afterwards the CPU performance increases a lot since verification is based on a simple hash. If the Signature Generator owns both the private key and the seed of the hash chain, then a secondary station can acquire a Hash Chain anchor that can be valid for multiple primary stations. Thus, this decreases the resource requirements when a secondary station scans multiple primary stations.

It is to be noted that a different approach is to split the signing capabilities between the Signature Generator and the primary stations in a kind of Public Key Infrastructure where the Signature Generator is in the top and the primary stations are signed by the Signature Generator. The Signature Generator is in charge of signing with the second signature algorithm the anchor of the hash chain used during a long_interval. When this signature is performed, the DSA can also check that the anchor corresponds to a known seed known to a primary station only (this requires confidentiality in the exchange between the Signature Generator and the primary station). The Signature Generator will sign a single time all parameters that remain static in the long interval period of time. The Signature Generator provides the primary station with the signed anchor and signed fixed parameters. The primary station keeps broadcasting these fixed parameters as indicated in Figure 11 during the long interval. Signing of any dynamic parameters or SIBs requested on demand is done by the primary station based on the Hash Chain approach. This approach is very suitable for situations in which the secondary station can ask on demand for certain SIBs and where strict time synchronization is required.

When both a Digital Signature Algorithm and Hash Chain approaches are used, the signature of static fields of multiple SIBs (e.g., PCI, MIB, SIB1, SIB2,...) can be located in SIB1 or a new SIB. If it is included in a new SIB, this SIB can be sent to the secondary station on demand decreasing energy consumption. The remaining SI (e.g., SIB1, SIB2,...) contain a MAC computed with the hash-chain based approach that allows for fast verification of dynamic fields.

It is to be added that, in 14ms a hash chain with 10000 links can be generated. If the long interval is SFN and HFN, 2^20 links are needed. This takes 1.46 seconds. If the long interval is SFN, then this will be roughly 1.4ms. Since only a Hash Chain link is disclosed every 80ms, the times to generate the Hash Chain becomes 18ms and 0.175ms. Thus, it can be concluded that a Hash Chain approach is feasible. The DSA signature can be included more frequently than the SFN interval to allow for a faster acquisition of the Hash Chain anchor and more frequent verification of static parameters. The primary station can send a request to the Signature Generator to sign the static parameters every long_interval time and during that long interval, the primary station can keep broadcasting that signature for the fixed parameters and signs itself the dynamic parameters using the Hash Chain-based approach.

It is to be noted that if only a DSA with a bulky signature is available, or if PKI involving bulkier certificates is required to verify the public keys, the DSA signature can be fragmented over multiple messages with the purpose to sign a single anchor. For instance, if in every SIB1 we can include a fragment of 64 bytes and the signature+certificate signing a 32 byte anchor is 1600 bytes long, we can split the signature+certificate in 25 consecutive messages. If a new message is broadcasted every 160 ms, then the long interval is at least 4 seconds long. Still, this approach ensures that every single message can be signed and verified when the secondary station has acquired the anchor (faster verification) and that the verification is faster.

In the above example, if the secondary station does not have the anchor yet, it needs to wait 4 seconds till it can start verifying all messages. Alternatively, the system broadcasts the signature of both the new anchor and of the old anchor. This allows the secondary station to start receiving packets, e.g., starting with h_(n-i), pre-verifying them with the hash-based approach, and as soon as the old anchor h_0 is received, the secondary station can compute n-i hashes to complete the verification.

In order to avoid potential attacks in which a secondary station does not have a good time synchronization with a Signature Generator and an attacker tries to exploit this situation by recording messages and replying them while misusing the disclosed HC links, the system can be enhanced by including the hash of the messages protected with the HC approach as input of the message that is signed with the DSA algorithm. This means that an attacker cannot use misuse those values at its will.

Thus, the broadcasted anchors can be part of different hash chains, i.e., having two different seeds, or intermediate links in a same hash chain separated by n hash operations. To determine the case, the hash anchor is encoding using the following format:
0XYZ ...XYZ (new anchor for a new hash chain)
1XYZ...XYZ (new anchor corresponding to an intermediate link in the previous hash chain)
Here, XYZ...XYZ correspond to the actual hash value, i.e., h_(n-i). This differentiation is important so that if a secondary station is already listening to the primary station for some time, the verification of a new anchor that is an intermediate link in the previous hash chain can be performed faster with a single hash operation.

In accordance with a fifth embodiment, which may combined with the previous embodiments or implemented separately, it is proposed to determine a location of primary station the secondary has contacted and to verify if this location is in agreement with a reference location for this primary station.

More specifically, in some of the proposed solutions, the Signature Generator performs the verification of primary station by doing the following:
1. Get the public-key trust anchors
2. Cell scanning: scan frequencies; exclude PCI duplicates
3. Verify digital signatures excluding any with a wrong signature
4. Verify time counter: exclude the ones with old timer.

However, this approach has some drawbacks. First, it requires setting up the trust anchors. Further, it excludes Physical Cell Identifers (PCI) duplicates directly, and this means, that this can lead to a Denial of Service attack if an attacker advertises False Base Stations with the same PCI than those in the area or worse connectivity. The secondary station might not scan everything or might just miss some information due to interferences during scanning. It is also recognized by the inventors that the physical location is currently not checked. This location is a parameter that must be verified and checked by a secondary station to make sure that an attacker does not rebroadcast information at a different location. Similarly, even if digital signatures are used, private keys can be compromised in the same way that the private keys of certification authorities have been compromised. If this happens, an attacker could still place False Base Stations publishing System Information signed with a compromised private key.

It is thus proposed in this fifth embodiment to solve these problems. To avoid the problem of excluding base stations with a duplicated identifier, in addition or alternatively to the solution of the first embodiment, it is possible to make use of location information derived from data broadcasted at physical layer. One of the advantages of this embodiment is that this can happen even before MIBs and SIBs are processed (and digital signature verified). For instance, if two signals with the same cell identifier are coming from different locations and the secondary station is aware that the (a) primary station is located in one of them, but he is not aware of any primary station in the other location, then the secondary station can filter out the primary station whose location does not match the known location.

In particular, a secondary station can also have access to the location information of primary station. Therefore, according to the fifth embodiment, it is proposed a method for validating the identity of a primary station, the method comprising receiving at least one signal at a secondary station. The secondary station then determines a location parameter based on said received signal. Then, the determined location parameter is compared to a reference location parameter linked to the identity of the primary station to decide whether the primary station is trustworthy.

Thus, the secondary station can determine if the received signal is likely to originate from the site of a real primary station. This renders an attack more difficult since the physical location could exclude part if not all of the false primary station of such an attacker.

In a first variant of the fifth embodiment, the determination of the location parameter comprises estimating a radiation pattern of the primary station, and wherein comparing the determined location parameter to a reference location parameter includes comparing the estimated radiation pattern to a reference radiation pattern of the primary station. In such a case, the secondary station may take into account its own location to determine reference radiation pattern.

In this variant, the reference radiation pattern may be obtained from a database of primary stations. For instance, the application mastdata offers this data. Another possibility is that network operators who trust each other exchange the positions of the primary stations creating a combined list of primary stations. The primary stations located in the tracking area where the secondary station is located are stored on the secondary station. When receiving MIB and SIB1, if the secondary station determines that the position of one of the primary station having a duplicated cell identifier does not match its expected location, the secondary station can only exclude that primary station.

The location of the primary station can be estimated taking into account that primary station broadcast the synchronization signals using different beams radiated in different directions and using a different identifier as can be shown on Figure 12. In particular, 5G supports up to 1008 PCIs computed as 3N_{SSS} + N_{PSS} where N_{SSS}={0,1,...,335} and N_{PSS} ={0, 1, 2}. Here, SSS refers to the Secondary Synchronization Signal identifier and PSS refers to the Primary Synchronization Signal identifier. The PSS and SSS are transmitted as part of a Synchronization Signal Block (SS Block). SSBs is transmitted in a batch by forming an SS Burst (one SSB per beam) that is used during beam sweeping by changing beam direction for each SSB transmission. The maximum number of SSBs in an SS Burst is frequency-dependent and it can be 4 (below 3 GHz), 8 (3 to 6 GHz), or 64 (6 to 52.6 GHz). The periodicity of the SSB is configured by the network, while the default transmission periodicity for initial cell selection, the SS burst set periodicity is default at 20ms for all frequency ranges i.e., 2 NR frames. The primary station defines multiple candidate positions for SSBs within a radio frame. Each SSB, radiated in a different direction, can be identified by a unique number called SSB index and identification of which SSB is detected is depend on where secondary station is located. The secondary station can measure the signal strength of Demodulation Reference Signal (PBCH DMRS) of each SSB it detected for a certain period (a period of one SSB Set). From the measurement result, the secondary station can identify the SSB index with the strongest signal strength. This SSB with the strongest signal strength is the best beam for the secondary station.

If the secondary station knows the normal radiation pattern (direction of the SB#) of a primary station and its own location (e.g. by GPS), and has measured a primary station, has information about the PCI, and the best SBs and relative received power can have an indication whether the primary station is real or false.

In Figure 12, an attacker places a FBS targeting UE1. Since the UE1 makes use of the technique used in this part of the invention, the FBS has to redirect its beans so that UE1 receives the same transmission signature. That is why the yellow beam is pointing towards it. The FBS will successfully target UE1, but other UEs (e.g., UE2) can still differentiate between the real BS and the FBS since the radiation pattern changes.

Assuming that the secondary station may know its location and the radiation pattern (in which direction the different beams of base station point when broadcasting the SSBs with different identifiers), the secondary station can derive what the expected received radiation pattern should be. Typically a secondary station 1200 has an omnidirectional antenna. For instance, if a secondary station knows its position and that the beam 1201 points towards it, the beam 1203 goes in the opposite direction and that the beams 1202 and 1204 go in perpendicular directions, then the secondary station 1100 can expect the biggest signal strength for the beam 1201, the lowest for the beam 1203, and intermediate values for the beams 1202 and 1204. The expected relative signal strength scan be derived from the gain distribution of the antenna for the different beams given the specific position of secondary station 1200 since it can compute its relative position, and with it, it can compute the gain of the antenna towards the secondary station 1200 for the different beams. It can now compare this expected signal with the received signal by computing the cross-correlation. If the signals are aligned, the maximum should be around the zero. If the cross-correlation outputs a maximum much further away than 0, then the primary station can be classified as a potential fake base station.

This method may not always give guarantees or prevents an attacker from attacking a specific target secondary station, but it can reduce the number of devices that can be addressed by a FBS to a much smaller fraction of them reducing the overall risk.

An alternative or complementary solution is to keep a log of primary stations in a well-known data base that could be denoted as base station log (BSLog) or multiple data bases operated by multiple parties. One option is to construct this base station log based on information owned by the network operators who know the location and configurations of the base stations. A secondary station can then request the BSLog information of the primary stations located close by.

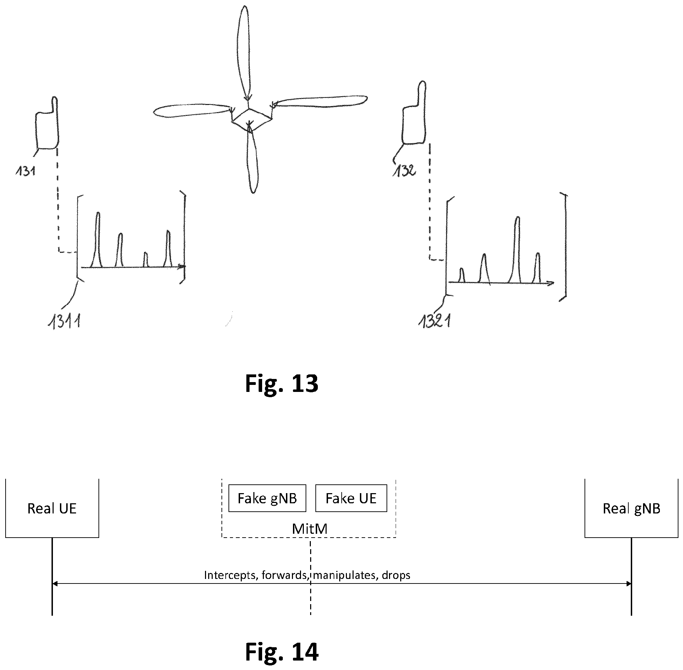

A further option is to build public BSLogs where users can submit their measurements or the scanned base stations and network operators can also publish the available base stations. Such data bases exist, even if they do not seem to be widely extended. An example of them is mastdata. If such a BSLog exist, a UE can verify whether the estimated location of the primary station matches the location of this primary station included in the BSLog providing additional assurances. Since the decisions of the secondary station depend on the contents of the BSLog, it is fundamental the BSLog is trusted. Increased trust can be achieved if there are multiple BSLogs that can be externally audited. In order to avoid that the BSLog manipulates its entries, the entries can be combined by means of a Merkle tree verification tree where the tree root is made public. This makes sure that a BSLog cannot modify certain entries at a later point of time. This technique is used in Certificate Transparency as specified in rfc6962. Another option is to use a type of block chain technology. Thus, information submitted to a BSLog can be used to verify and estimate the location of the primary stations by taking into account the submitted signal strength and the SBs measurements. For instance, if:
∘ UE1 131 is at location (x=0, y=0), measures a given radiation pattern 1311 (Figure 13). This gives an indication of which beams is pointing towards UE1 131.
∘ UE2 132 is at location (x=2X, y=0), measures a given radiation pattern 1321 (Figure 13). This gives an indication of which beams are pointing towards UE2 132. With this information UE1 131 and UE2 132 together can determine whether the BS is between them in x<0 or in x>2X.

Then, the BSLog can determine that measurements reported by UE1 and UE2 and any other UEs match since the given an estimation for the location of BS1 that matches, also taking into account the measured signal strength and direction.

UEs do not need to transmit their measurements immediately or always, but they can do it with a certain delay to protect their privacy. They can also add some noise to the measured radiation pattern to protect their privacy.

The above can also be extended with the usage of digital signatures. In this case, the BSLogs only accept measurements from BSs including a valid digital signature. In a similar way, when a UE receives SI from a BS, the UE checks whether the received SI, including the used public-key, matches with information available in public BSLogs.

In another variant of the fifth embodiment, the location parameter is determined by checking whether an encryption key used by the primary station corresponds to an encryption key allowed to be used locally. In a further variant, the signal is a configuration message from a primary station at a secondary station, and the configuration message includes at least a signature for authenticating the configuration message. In this case, the secondary station authenticates the configuration message by
- checking whether the private-key associated to the public-key required to verify the message is authorized to sign configuration messages in the current location of the secondary station or in the current PLMN,
- if authorized, verifying the signature.

In this variant, the Signature Generator's public-key may also be associated to certain rights of the private key, for instance, rights to sign System Information of base stations in certain location only. Thus, next to checking the validity of the signature and the timing, the secondary station also has to check whether the private key used to create the signature has rights to be used in its current location. For instance, if a UE has the public key of a Chinese network operator and it detects a base station of requiring that key to verify SI of a base station when the UE is in the United States, then the UE should block that base station. This ensures that an attacker cannot, e.g., compromise the private key of an operator and use it to create fake base stations somewhere else. Similarly, multiple pairs of public-private keys can be used by a network operator, each pair associated to a different location. This limits the possibility of wide attacks.

To address this, a cell scanning procedure could be extended to check the location-related signing rights of a private key (in the following pseudo code):
*For each of the N cells:*
*acquire MIB and SIBs;*
*If there is no digital signature, mark the cell as unprotected.*
*If there is digital signature,*
*if the public-key is allowed to sign SI in the current location*/*PLMN*/*...,*
*then verify the digital signature and time counter;*
*if both digital signature and time counter are good, proceed with the cell and break;* /* *this is the usual case, i.e., in the absence of an attacker* */
*if either digital signatures or time counter is bad, mark the signature as bad and store the time counter;*
*go to the next cell;*
*End of for loop;*

Similarly, it is recommended that Signature Generator uses multiple key pairs for different locations to reduce the impact in case of a security breach. The secondary station can check whether the correct key pair is used at its current location.

Regarding the verification of the access rights associated to a public-key (e.g., is a public-key authorized to verify information at a given location, is a public-key authorized to verify SI from a given PLMN, etc) can be done either before or after signature verification. Doing it before signature verification has the advantage of being faster and more energy efficient, similarly to the freshness verification.

In connection to the various embodiments discussed earlier, a key issue refers to the provisioning of the trust anchors in secondary stations. This refers to the public-keys used to verify the signed information. A first option consists in installing this information when the secondary station joins the core network for the first time. This means that the first connection might be prone to False Base Stations, but this danger goes away afterwards. This is a suitable solution if a single pair public-private key is used by an operator. But it becomes more difficult to use if the operator wants to use multiple key pairs, e.g., depending on the location. This also becomes an issue when the public-keys are only valid during a given period of time.

In this improvement, it is considered that the pair of public/private keys at the Signature Generator are not signed and are not embedded in a certificate, e.g., signed by a CA. This is a natural extension if it is desired that a secondary station can connect through primary station stations managed by multiple network operators.

A second option consists in using identity-based signatures where the public-key depends on several known parameters including operator and location. The first parameters can be derived from information available in SIB 1:

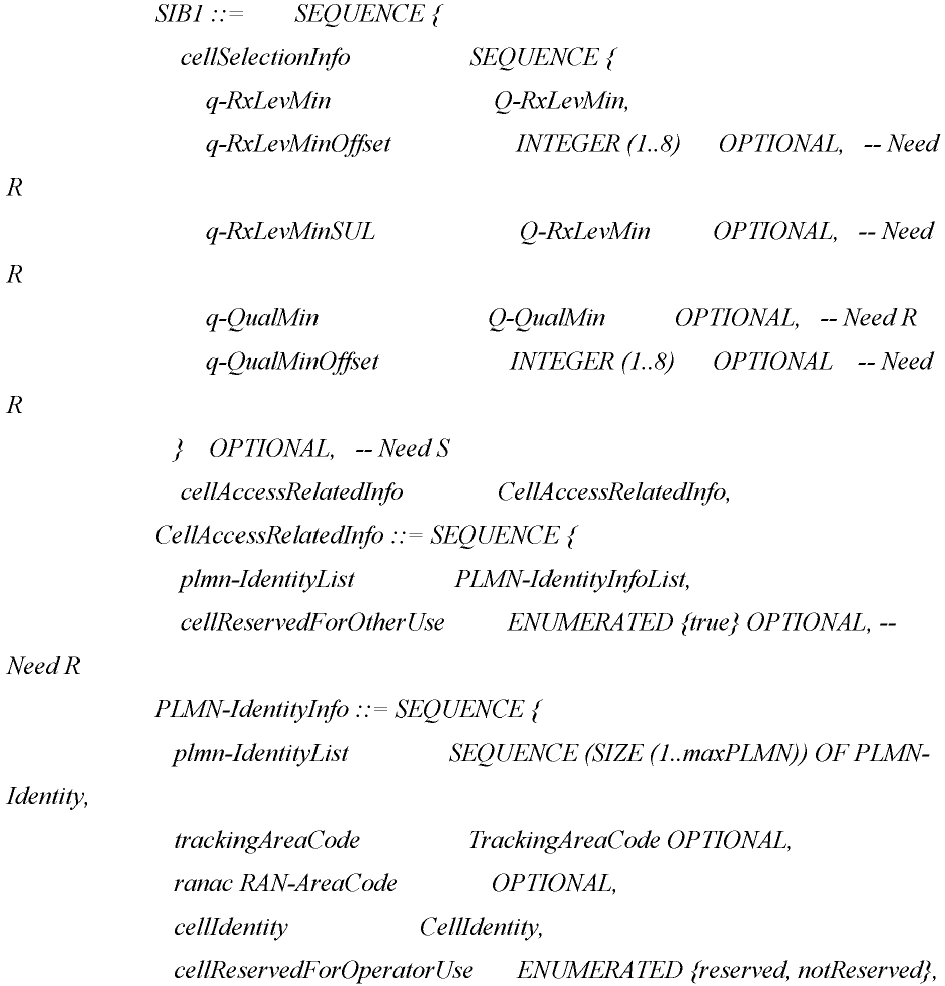

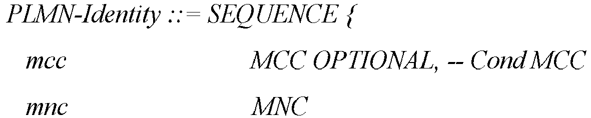

These parameters include the PLMN identifier since it identifies the owner of the private key; location information such as the tracking AreaCode. However, this information could also be enhanced with location information (GPS coordinates) to better determine the location of the primary station and mobility aspects of the primary station: is it static or does its location change (e.g., if placed in a bus). Timing information is not included in the generation of the public-key since it is verified afterwards.

In the already discussed embodiments, it has been described so far solutions focusing on avoiding False Base Stations. However, another type of attacks a network could be victim of is A Man in the Middle (MitM) attack. These involve relay nodes that can just forward the information of a real primary station and may not be detected by some the previous embodiments. It has been proposed to include and sign a Time_Difference field so that a secondary station receiving a message rejects it if the current time is older than Transmission_Time + Time_Difference. However, this may not always be good enough because it is difficult to estimate the value of Time Difference.

A possible option to avoid MitM attacks is to use signed cell identifiers (PCI). Thus, primary stations with a duplicated PCI are removed. However, this approach has some issues as well. First, a secondary station might not be able to detect or receive the signal of a real base station. For example, as shown on Figure 14, the attacker might use a False UE with a very sensitive/powerful antenna that allows it to get the signal of primary stations that are out of range from the secondary station. This is a so call range extension attack. Second, the attacker might just jam the signal of the real base station at the secondary station. And third, as indicated above, removing duplicated primary stations without further checks opens new ways to attack the multi-cell time synchronization method.

A sixth embodiment thus proposes a solution that is much more robust. In accordance with this sixth embodiment, the Signature Generator signs the map between a primary station's SFN and the Signature Generator time. Furthermore, the secondary station's clock is in tight sync with the clock of the Signature Generator. If these pre-conditions are fulfilled, the secondary station receives signed system information from the primary station, verifies its signature, verifies the time, verifies the SFN values, and checks whether the broadcasted data has been broadcasted in the verified SFN values.

Thus, it is proposed in accordance with the sixth embodiment a method for checking authenticity of configuration messages, the method comprising receiving a configuration message from a primary station at a secondary station, wherein the configuration message includes
- a timing correspondence indication between a clock value at a signature generator and a system frame numbering used by the primary station,
- a frame number indication identifying the frame during which the second configuration message was sent and
- a signature for authenticating the configuration message.

Furthermore, according to the method of the sixth embodiment, it further includes authenticating the configuration message by
- checking that the frame number indication corresponds to the frame number in which the configuration message was received,
- comparing the time of reception of the configuration message with the estimated time of transmission based on the timing correspondence indication and
- verifying the signature based on the configuration parameter value.

Alternatively, the method may comprise
receiving a first configuration message from a primary station at a secondary station, wherein the first configuration message includes
- a timing correspondence indication between a clock value at a signature generator and a system frame numbering used by the primary station and
- a first signature for authenticating the first configuration message,
   receiving a second configuration message including at least one configuration parameter value, a frame number indication identifying the frame during which the second configuration message was sent, and a received second signature,
   authenticating the second configuration message by
- checking that the frame number indication corresponds to the frame number in which the second configuration message was received,
- comparing the time of reception of the second configuration message with the estimated time of transmission based on the frame number indication and the timing correspondence indication and
- verifying the received second signature based on the configuration parameter value.

In these embodiments, the first configuration message may include a cryptographic key to be used to authenticate the received second signature. Further, similarly to some of the previous embodiments, the first configuration message includes static configuration parameter values, and the second configuration message includes variable configuration parameter values.

In order to maintain a high level of security, the first configuration message may have a first limited time validity, being equal to one of the following: the time required for the subframe numbering to span around its whole range of values, the time required for an hyperframe numbering to span around its whole range of values.

In an example of the sixth embodiment, the second configuration message may have a second limited time validity, being equal to one of the following: the time required for a predetermined number of the most significant bits of the subframe number to change, or the time required for the six most significant bits of the subframe number to change, or 160ms, or 80ms.

Similarly as the already discussed embodiments, the second signature may generated or verified by means of one of an ECDSA, a hash chain.

Some aspects of the general idea of the sixth embodiment can lead to a high overhead on the Signature Generator, since it requires signing the dynamic System Frame Number fields of all primary stations. This means that the Signature Generator needs to sign many messages. This can be optimized, e.g., as follows:
a) the static fields of gNB are signed with digital signature parameters providing long-term security including:
   a. when, based on DSnF time, the gNB SFN equal 0. This is denoted reference_SFN_gNB.
   b. the public-key that is used to verify dynamic fields:
      current_dynamic _fields_public_key.
b) The signature validity for the signed static fields equals 10"240 ms, i.e., the time it takes for System Frame Numbering to wrap around.
c) The dynamic fields of a primary station are signed with private key current_dynamic _fields_private_key. This signing key can be specific for a primary station.
d) The signature validity for the signed dynamic fields equals a frame multiple, e.g., the time it takes till a new MIB is broadcasted or the time it takes till the 6 most significant bitts of the SFN, which are included in the MIB, change (160 msec).
e) The secondary station clock is in sync with the clock of the Signature Generator.

If these pre-conditions are fulfilled, the secondary station receives from a primary station:
a) The static system information of the primary station signed by the Signature Generator. The secondary station verifies its signature, verifies the time, and obtains reference_SFN_gNB and current_dynamic_fields_public_key.
b) Dynamic fields signed with current_dynamic_fields_private_key. The UE can for example then:
   1. verify signature,
   2. check the dynamic fields SFN,
   3. check whether the received system information has been received in the currently verified SFN,
   4. check whether
      reference_SFN_gNB + 10*SFN = current_UE_time (Eq. 1)

This protocol solves the MitM attack because:
a) if the FBS keeps the same reference SFN reference time as the primary station, it will have to change the values of SFN in the broadcasted system information since it is not capable to process them without delay.
b) If the FBS introduces its own SFN reference time, then check in Eq 1 will fail.

This design is robust because it limits the validity of the signature of the static fields to around 10". This avoids the need of revocation lists. Moreover, it limits the validity of the current_dynamic_fields_public_key. Thus, it is possible to use a lightweight scheme.

Further, it limits the validity of dynamic fields to a few tens of miliseconds. This provides a solution to avoid MitM relay nodes, because when the MitM replays the message, the MitM will process it and send it again and this takes some time.

If the MitM has the same SFN reference system as the real BS, then this requires changing the SFN fields in the MIB since it is transmitted later, and the verification fails therefore. If however the MitM does not change the SFN so that the signature can be verified, the FBS will need to use its on SFN reference time so that the SFN counters fit. But this will not match with the signed SFN_Reference_time. So the check in Eq. 1 will fail. The MitM node could wait 10.24 seconds to rebroadcast the information using the same SFN reference time, but this may not work if the signed static fields are valid for only this period of 10.24s.

In further variants of the sixth embodiment, instead of signing the static parameters for the duration of 2^10 frames, i.e., 10.24 ms, or till the SFN wraps around, the static parameters can also be signed for the duration of 2h54'45.76", i.e., till SFN and HFN wrap around. This reduces further the overhead on the Signature Generator. Further, the digital signing algorithm used to sign dynamic parameters can be based on a standard algorithm such as ECDSA but with a lower security level due to the short validity of the corresponding public-key. Alternatively, it can be a lightweight method, e.g., based on hash chains, Tesla.

The proposed combination of signatures provides also a good solution towards quantum-resistant signatures. Digital signatures are bulky in either public-key or signature size. The solution of the sixth embodiment allows using a heavy digital signature with a relatively low frequency. The dynamic fields need to be signed much more frequently, and for this, hash-based solution, that is also quantum-resistant, is a good candidate. Furthermore, the signing of dynamic fields can be done in the Signature Generator (DSnF) fitting the current DSnF architecture. But it can also be outsourced to the primary stations since the DSnF is signing all critical fields, including the starting time for SFN. There are clear advantages if the gNB signs the dynamic fields: the overhead on the DSnF is lower, signed information is available for broadcast on time.

This solution works as well if only a DSA is used. Thus, a DSA may be used to sign the static information during a long_interval of time. This signs also the Hash Chain anchor used by the primary station to sign dynamic fields. When this is done, the DSA should also be used to sign the SFN_HFN_Reference time. A good trade-off is to have the DSA signing the new HC anchor, SFN_HFN_Reference_time, ... HFN/SFN (2h54'45"). An alternative is every SFN period (10.24 seconds) having the drawback that the DSnF has to handle much more data requests. The rest of SIBs/MIBs are protected with a HC-based approach that is managed by each primary station.

Eventually, in this sixth embodiment of the invention, it was mentioned several times that the UE might be initially slightly out of sync or might not have the right time. If this happens and the UE has a slightly different time (e.g., 10 ms difference), the UE could only accept the message if it is received in 1,...,max_delay HFN/SFN later than expected. When this happens, the UE should start a secure time synchronization protocol with DSnF and check again whether the delays keep happening. If this is the case, the UE could be under a MitM relay node and should look for a different primary station.

All the previously mentioned embodiments can be used in a single solution detailed in the seventh embodiment and linked to 5G. In accordance with the seventh embodiment, a cell scanning procedure is described to avoid FBSs and MitM nodes fitting in the DSnF framework. Its main features include:
Using information in the Physical layer distributed in the synchronization signal, together with the UE location, and known radiation pattern of base station for early detection of FBS,

Using a performance-optimized combination of PKI and hash-chains to secure system information, namely MIB and SIB1, and where in one of the key embodiments the DSnF signs the anchors of hash chains, and the base stations use a hash chain approach to protect the system information, and UEs verify the signed information to avoid FBSs.

Providing optimizations to support efficient verification of fixed and variable fields improving the performance of the DSnF and system,
verifying that the private key is allowed to sign messages in the current location of the UE to avoid attacks that compromise a private key in location A and use it to sign information in location B,
verifying the freshness of the signed information, where the timing information is learned from multiple base stations or obtained through an initial handshake between UE and DSnF, to avoid simple replay attacks.
verifying that the signed SFN/HFN fits the current time avoiding in this way MitM relay attacks.

The cell scanning procedure to deal with FBS can include multiple optional steps as described below.
∘ UE tunes to a specific frequency
∘ UE tries to detect PSS, SSS, If UE fails to detect this, it goes to tune to next frequency
∘ Once UE successfully detect PSS/SSS,
   UE stores chosen SSB index and the corresponding signal strength Demodulation Reference Signal (PBCH DMRS)
∘ [BS Location and PCI check based on physical signals] Based on UE's current location and SSB index and the strength of PBCH DMRS, the UE checks whether the estimated location of the BS matches the location stated in a trusted BSLog as in the fourth embodiment.

If there is a BS with unique PCI and its estimated location matches with the location in a known BSLog, the device accepts that BS.

If there is a BS with unique PCI but different estimated location than in the BSLog, the device places that BS at the end of the preference list.

If there are two BSs with identical PCI but different estimated location, and one of the locations does not match the BSLog, the device discards that BS.

If there are two BS with identical PCI and identical estimated location (e.g., if the UE does not use part of Solution 3; or the attacker targets UE), the device marks them as duplicated and moves forward in the process to check their signature and time.

UE tries to decode PBCH obtaining the MIB. Once UE successfully decoded PBCH, it tries to decode the PDCCH and PDSCH for RMSI and OSI.

[Verification of SI digitally signed] At this point of time, it can verify the digital signature of MSI that is broadcasted in SIB1 if the trust anchors are configured. If they are not configured, then the signature verification is skipped.

This is done as in the second embodiment above, where many fields are static. Those fields are verified only once. For later times, the only operation is to check whether their values remain unchanged. If this holds, the hash of the fixed fields is used as input and concatenated with the varying fields to verify the current signature.

The UE discards the BS if the verification fails.

Further, the UE discards the BS if the private key signing the message is not allowed in the area where the UE is located. The UE can obtain the signed location of the BS that is also broadcasted in a SIB and the BS is rejected if the location does not match the location where the UE is placed.
∘ [Freshness check] This step in the cell scanning procedure relates to freshness verification according to the fifth embodiment.
∘ [Relayed messages check] This step in the cell scanning procedure is done according to the sixth embodiment.

In the above embodiments, the Signature Generator has two public-key pairs to sign static and dynamic fields. In another embodiment, the primary stations are the entities owning these two key pairs.

In the above embodiments, one of the salient aspects is the need for synchronization between the various entities and in particular the primary station and the Signature Generator need to be synchronized, or they have to know the time difference. Indeed, the primary station has to broadcast the information. But the primary station needs to know "when" to do so to make sure that the Signature Generator time broadcasted in the signed SI of multiple base stations is in sync. If it is not, this can lead to a situation in which a primary station has a clock that ticks faster (and thus, its time is higher). Following the sync method in the description, a secondary station will use this time as reference. This can lead to the situation in which a secondary station rejects valid primary stations, maybe with a better transmission power leading to better connectivity, because of this reason.

Further, it helps preventing replay attacks. If the time is used avoid replay attacks, then it is important that the base station broadcasts accurate time. Otherwise, if the clock of a base station ticks faster (and then it is newer), it will broadcast the data a bit earlier, so that an attacker can replay the information.

Additionally, it is important to check the time consistency: In 3gpp TR33.809 Section 6.20.2.5.4 it is stated " when the digital signature from each cell is valid but the Time Counters recently received from multiple cells fail verification, the UE checks the consistency of the Time Counters from those cells. If they are close to each other, it indicates the UE time is out of sync with the network. If the Timer Counters are inconsistent, it indicates the presence of attacker (e.g., by replaying old information). In either case, UE can select the cell with the highest time counter, since a relayed time counter will highly likely not be the latest. If we choose to check the consistency of time counters received from multiple cells, we may not need to check the time counter against UE local time. This may allow to eliminate the need of time synchronization among all UEs and the network. " In Section 6.20.2.5.5, the cell selection process is described. After scanning and removal of SI with duplicated PCI, it proceeds to adquire MIB, SIB and verify signature and freshness. From here, we can deduct that the current DSnF performs the time consistency check after removal of SI with duplicated PCIs.

Moreover, as discussed above, a MitM relay node might be in range of the target UE, but the target UE might be too far from the real base station. However, some UEs in the area are likely to listen to both the MitM relay node and the real base station. Those UEs could to report the excluded SI (because of duplicated PCI) to the core network, or a base station once connected, so that the core network assesses the presence of a fake base station. If the core network assessment is positive, the core network might decide to inform the affected base station and take further actions, e.g., switch it off for a limited period of time.

In 3GPP TR33.809, Section 6.20.2.6.1 it is described how to deal with replay attacks. For local replay attack prevention, the removal of PCI information is used. For remote replay attack prevention, the text mentions the location. As described above, the removal of SI with duplicated information might not be enough because of the range extension attack that is described in which both the MitM and base station are relatively close to each other. However, something that can be added and signed in the broadcast message is the range of the base station. The range information together with the location of the base station can help to avoid, or at least mitigate, the above attack as well since it determines the area in which it is expected to receive SI from a given base station. In a extreme case, the base station can even broadcast the area where reception is expected.

Eventually, the current text in 6.20 says that MIB, SIB are signed. It is important to highlight that some fields are also signed although outside of MIB and SIB. For instance, the 4 LSB of SFN are not included themselves in the MIB.

Thus, as seen in the previous embodiments, it is proposed a whole system to reduce the possibility of attacks based on False Base Stations or Man in the Middle. The components of this system include a secondary station, a Signature Generator and a primary station implementing one or more of the mentioned embodiments. The apparatus may be implemented by a program code means of a computer program and/or as dedicated hardware of the related devices, respectively. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

## Claims

1. A method for a secondary station to obtain a time reference in a cellular network, the method comprising
receiving a plurality of system information, SI, messages from a plurality of primary stations, said SI messages including each a respective time reference information related to the corresponding primary station,
checking the validity of a received signature for each of the primary stations,
checking a cell identifier for each of the primary stations with a valid signature, and ignoring time reference information from primary stations with a cell identifier being identical to another primary station and having an earlier value than the one from the other primary station, and
deducing a local time reference from one or more of the time reference information originating from primary stations with a valid signature.

2. The method of claim 1, wherein the time reference information is at least one of the following: a time offset representative of the difference between a clock value at the primary station and a clock value at a Signature Generator of the network, a clock value at the primary station, a clock value at the Signature Generator.

3. The method of claim 1 or 2, wherein the step of deducing a local time reference includes computing an average from a plurality of the time reference information originating from primary stations with a valid signature and without duplicate cell identifier with earlier time.

4. The method of claim 1 or 2, wherein the step of deducing a local time reference includes selecting the time reference information with the latest value originating from primary stations with a valid signature.

5. The method of any of the previous claims, further comprising
the secondary station at initial connection to the network sending a request for a time reference, said request being addressed to a Signature Generator,
wherein the request for time reference includes a randomly generated number used as a nonce,
receiving the time reference and the nonce, wherein the time reference and the nonce are signed with a nonce signature,
using the nonce and nonce signature to check authenticity of received messages,
using the received time reference to configure a clock at the secondary station.

6. The method of claim 5, wherein the request is part of an Initial Radio Resource Communication, RRC, setup request message.

7. The method of claim 5, wherein the request is part of a Network Access Stratum, NAS, identity response message sent in response to a NAS identity request.

8. The method of any of the previous claims, wherein the received signature is checked using at least one of the following algorithm: a Public Key Infrastructure, PKI, algorithm, a Boneh-Lynn-Shacham, BLS, signing algorithm, a Boneh-Gentry-Lynn-Shacham, BGLS, signing algorithm, an Elliptic Curve Digital Signature Algorithm, ECDSA, Falcon signing algorithm, Rainbow signing algorithm, a Great Multivariate Short Signature, GeMSS, algorithm.

9. A secondary station adapted for communicating in a network, the secondary station comprising a receiver adapted to receive a plurality of system information, SI, messages from a plurality of primary stations, said SI messages including each a respective time reference information related to the corresponding primary station,
a controller configured to check the validity of a received signature for each of the primary stations, and to check a cell identifier at least for each of the primary stations with a valid signature, and ignore time reference information from primary stations with a cell identifier being identical to another primary station and having an earlier value than the one from the other primary station, and
said controller being adapted to deduce a local time reference from one or more of the time reference information originating from primary stations with a valid signature.
